# EUROPEAN PATENT APPLICATION

(11) **EP 4 654 153 A1**
(43) Date of publication of application: **26.11.2025**
(21) Application number: 25176252.2
(22) Date of filing: 14.05.2025
(51) Int. Cl.: G06V 10/62, G06V 20/52, G06V 40/10

(54) **MONITORING CONTROL DEVICE, MONITORING METHOD, AND COMPUTER PROGRAM**

(30) Priority: 23.05.2024 JP 2024084225
(71) Applicant: TOYOTA JIDOSHA KABUSHIKI KAISHA, Toyota-shi, Aichi-ken 471-8571 (JP)
(72) Inventor: YAMAZAKI, Masayuki, TOYOTA-SHI, AICHI-KEN, 471-8571 (JP)
(74) Representative: Cabinet Beau de Loménie

(57) **Abstract**

A monitoring control device is configured to calculate a number of detection targets present inside a predetermined area based on an image captured by an imaging device, count the number of the detection targets present in the area among the detection targets detected in an image to calculate a first estimated number of the detection targets inside the area, track the detection targets detected in the image to thereby count the number of detection targets entering the area and the number of detection targets exiting the area respectively as an entry count and exit count and calculate a second estimated number of the detection targets inside the area based on a difference between the entry count and the exit count; and, when the first estimated number and the second estimated number differ, employ the larger one as the number of the detection targets inside the area.

## Description

### FIELD

The present invention relates to a monitoring control device, monitoring method, and computer program.

### BACKGROUND

Japanese Unexamined Patent Publication No. 2019-201326 discloses the art of detecting and tracking (following) persons appearing in an image captured by a camera so as to count the number of persons passing a detection line.

### SUMMARY

However, in the above-mentioned prior art, when for example several persons passed a detection line in a closely continuing state, only the person at the front in the image was liable to be counted and the count was liable to become small.

The present invention was made focusing on such a problem and has as its object to precisely calculate a number of detection targets present inside a predetermined area based on an image captured by an imaging device.

To solve this problem, a monitoring control device according to one aspect of the present invention is configured to calculate a number of detection targets present inside a predetermined area based on an image captured by an imaging device. The monitoring control device is further configured to count the number of the detection targets present in the area among the detection targets detected in an image to calculate a first estimated number of the detection targets inside the area, track the detection targets detected in the image to thereby count the number of detection targets entering the area and the number of detection targets exiting the area respectively as an entry count and exit count and calculate a second estimated number of the detection targets inside the area based on a difference between the entry count and the exit count, and, when the first estimated number and the second estimated number differ, employ the larger one as the number of the detection targets inside the area.

Further, a monitoring method according to another aspect of the present invention is a method by a monitoring control device configured to detect a number of detection targets present inside a predetermined area based on an image captured by an imaging device. The monitoring method includes counting the number of the detection targets present in the area among the detection targets detected in an image to calculate a first estimated number of the detection targets inside the area, tracking the detection targets detected in the image to thereby count the number of detection targets entering the area and the number of detection targets exiting the area respectively as an entry count and exit count and calculate a second estimated number of the detection targets inside the area based on a difference between the entry count and the exit count; and, when the first estimated number and the second estimated number differ, employing the larger one as the number of the detection targets inside the area.

Further, a computer program according to another aspect of the present invention is a computer program calculating a number of detection targets present inside a predetermined area based on an image captured by an imaging device. The computer program makes a computer count the number of the detection targets present in the area among the detection targets detected in an image to calculate a first estimated number of the detection targets inside the area, track the detection targets detected in the image to thereby count the number of detection targets entering the area and the number of detection targets exiting the area respectively as an entry count and exit count and calculate a second estimated number of the detection targets inside the area based on a difference between the entry count and the exit count, and, when the first estimated number and the second estimated number differ, employ the larger one as the number of the detection targets inside the area.

According to these aspects of the present invention, it is possible to estimate the number of detection targets inside an area based on an image captured by an imaging device by two types of methods, so it is possible to more precisely calculate the number of detection targets inside the area.

### BRIEF DESCRIPTION OF DRAWINGS

FIG. 1 is a schematic view of the configuration of a monitoring device according to one embodiment of the present invention.
FIG. 2 is a view showing a monitoring image in which a passenger area inside of a bus and an entry/exit area after a door are shown.
FIG. 3 is a flow chart for explaining monitoring control according to one embodiment of the present invention.

### DESCRIPTION OF EMBODIMENTS

Below, referring to the drawings, an embodiment of the present invention will be explained in detail. Note that, in the following explanation, similar component elements are assigned the same reference notations.

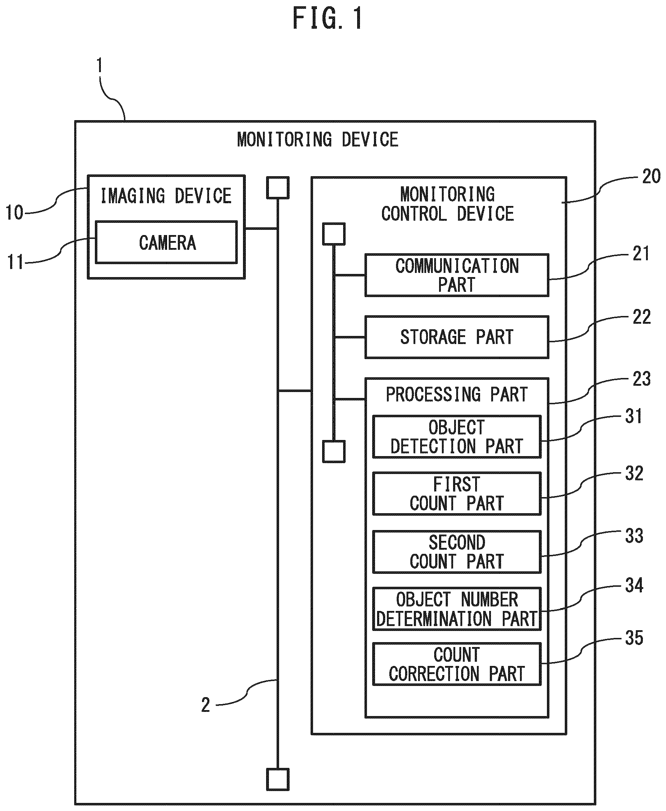

FIG. 1 is a schematic view of the configuration of a monitoring device 1 according to one embodiment of the present invention.

The monitoring device 1 is provided with an imaging device 10 and a monitoring control device 20 and calculates a number of detection targets present inside a predetermined area based on imaging data generated by the imaging device 10.

The imaging device 10 generates imaging data capturing the inside of a predetermined area targeted for monitoring. In the present embodiment, as the imaging device 10, at least one camera 11 is provided for capturing the passenger area inside a bus. The camera 11 captures at least the passenger area inside of the bus by a predetermined frame rate (for example, 10[Hz] to 40[Hz]) and generates a monitoring image (imaging data) in which the passenger area inside the bus is at least shown. Each time generating a monitoring image, the camera 11 sends the generated monitoring image to the monitoring control device 20.

Note that, in the present embodiment, the explanation will be given using as an example the case where the predetermined area is a passenger area inside of a bus, but naturally the predetermined area is not limited to a passenger area inside of a bus. For example, it may also be made part or all of the inside of a room, hall, train, etc.

The monitoring control device 20 is an ECU (electronic control unit) provided with a communication part 21, storage part 22, and processing part 23.

The communication part 21 is provided with an interface circuit for connecting the monitoring control device 20 to an internal network 2. The communication part 21 supplies a monitoring image received from the camera 11 to the processing part 23.

The storage part 22 has an HDD (hard disk drive) or SSD (solid disk drive), semiconductor memory, or other storage medium and stores various computer programs or data etc. used for processing at the processing part 23.

The processing part 23 has one or more CPUs (central processing units) and their peripheral circuits and runs the various computer programs stored in the storage part 22. The processing part 23 is, for example, a processor. The processing part 23 may further have another processing circuit such as a logical operation unit, numerical operation unit, or graphic processing unit. The processing part 23 performs processing in accordance with a computer program to thereby function as an object detection part 31, first count part 32, second count part 33, object number determination part 34, and count correction part 35 and operate as function parts (modules) for realizing predetermined functions. In the following explanation, when explaining processing using the function parts 31 to 35 as subjects, this shows the processing part 23 running programs for realizing the function parts 31 to 35.

Below, the specific content of the processing performed at the monitoring control device 20 will be explained. That is, the content of the function parts 31 to 35 realized by the processing part 23 performing processing in accordance with computer programs will be explained.

The object detection part 31 detects predetermined objects shown in a monitoring image received from the camera 11 as detection targets based on the monitoring image. In this embodiment, the object detection part 31 successively inputs a monitoring image into a classifier to thereby detect persons shown in the monitoring image as detection targets. The classifier for example can be made a convolutional neural network (CNN) having a plurality of convolution layers connected in series from an input side to an output side. Note that the method of detection of objects is not limited to such a method. Various known methods may be used for detection.

The first count part 32 and second count part 33 use different methods to detect the number of detection targets present inside a predetermined area. In the present embodiment, the first count part 32 and second count part 33 count the numbers of persons in the passenger area of a bus.

Specifically, the first count part 32 simply counts the number of persons present in the passenger area inside of the bus among the persons detected in the monitoring image and calculates this as the "first count".

On the other hand, the second count part 33 tracks persons detected at the monitoring image in a time series so as to respectively count the number of persons entering the passenger area inside of the bus (entry count) and the number of persons leaving that passenger area (exit count) and subtracts the exit count from the entry count to calculate the "second count".

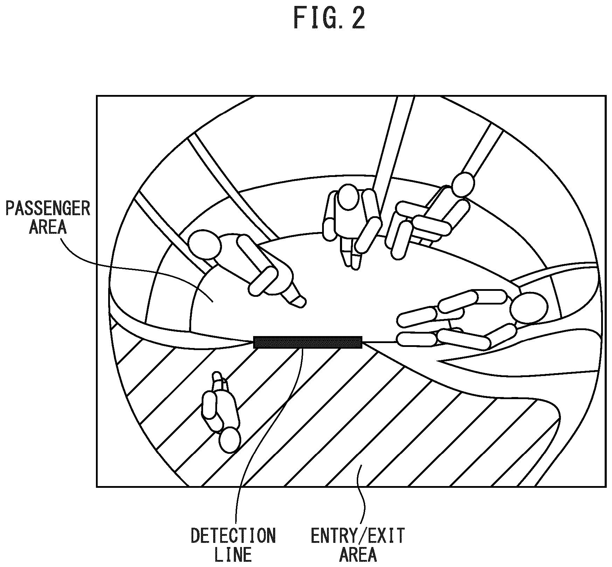

FIG. 2 is a view showing a monitoring image showing the passenger area inside of the bus (not hatched area) and an entry/exit area outside of the bus across a door (hatched area) and an image of when the bus has stopped and the door has opened.

The second count part 33, for example, as shown in FIG. 2, judges that a person detected in the monitoring image has entered the passenger area inside of the bus when that passenger crosses a virtual detection line drawn at a part forming the entry/exit of the passenger area inside of the bus (for example, a door part) etc. from the entry/exit area side toward the passenger area side. Further, the second count part 33 judges that a person detected in the monitoring image has left the passenger area inside of the bus when that passenger conversely crosses that virtual detection line from the passenger area side toward the entry/exit area side.

Note that, FIG. 2 shows a single detection line, but the number of the detection lines is not limited to one. There may be a plurality of lines present. Further, the detection lines may be used to form regions having circular, square, or other shapes.

The object number determination part 34 determines the number of persons present in the passenger area inside of the bus based on the first count and second count. When the first count and the second count are the same values, the object number determination part 34 employs that value as the number of persons present in the passenger area inside of the bus.

On the other hand, if the first count and second count are different values, the object number determination part 34 adopts the larger one as the number of persons present in the passenger area inside of the bus. Below, the reasons will be explained.

If the first count differs from the number of the persons actually present in the passenger area inside of the bus, basically it may be considered that a certain person has for example closely continued after another person etc. and is present in the passenger area in a state partially or wholly concealed. That is, the first count basically tends to be smaller than the number of persons actually present in the passenger area inside of the bus. In particular, this tendency is greater when there are a large number of objects in a relatively narrow area like a passenger area inside of a bus.

Therefore, when the first count is smaller than the second count, by adopting the second count as the number of objects present in the predetermined area, it is possible to more precisely calculate the number of objects when objects are present in a predetermined area in a state concealed by other objects.

On the other hand, looking at the case where the second count is different from the number of persons actually present in the passenger area inside of the bus, the case where a certain person has crossed the detection line and entered the area in a state closely continuing from another person etc. and partially or wholly concealed by the same and conversely an opposite case where the person has left the area may for example be considered.

In the former case, the entry count is counted smaller than the number actually entering the area, therefore the second count is counted smaller than the number actually present in the passenger area inside of the bus. In the latter case, the exit count is counted smaller than the number actually leaving the area, therefore the second count is counted greater than the number actually present in the passenger area inside of the bus.

Therefore, the second count may be counted smaller than the number of persons actually present in the passenger area inside of the bus and conversely may be counted greater than it. However, when the second count is smaller than the first count, by adopting the first count as the number of persons present in the passenger area inside of the bus, it is possible to more precisely calculate the number of objects when an object has crossed a detection line and entered an area in a state concealed by another object.

In this way, when the first count and the second count are different values, the larger one is adopted as the number of persons present in the passenger area inside of the bus because it is possible to more precisely calculate the number of objects when an object is present in a predetermined area in a state concealed by another object and possible to more precisely calculate the number of objects when an object has crossed a detection line and entered an area in a state concealed by another object.

If the first count and the second count are different values, the count correction part 35 corrects the smaller count to the larger count.

For example, if the first count is larger, the count correction part 35 corrects the entry count or exit count so that the second count becomes the first count. In the present embodiment, when the first count is larger, the count correction part 35 corrects the entry count to increase it so that the second count becomes the first count. This is because if the first count is larger, basically it can be guessed that the first count has become larger due to an object targeted for detection crossing the detection line and entering the area in a state concealed by another object.

On the other hand, if the second count is larger, the count correction part 35 corrects the first count to the second count.

In this way, according to the present embodiment, when the first count and the second count are different values, each time, one of the count values is corrected, therefore it is possible to suppress a drop in the calculation precision of the count by the first count part 32 and second count part 33 and in turn suppress a drop in calculation precision of the number of detection targets present inside a predetermined area.

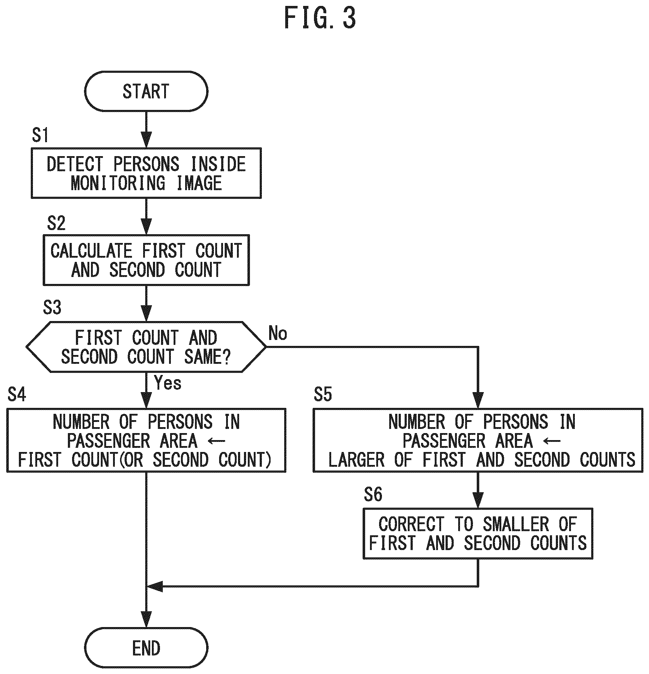

FIG. 3 is a flow chart for explaining monitoring control according to the present embodiment performed by the monitoring control device 20.

At step S1, the monitoring control device 20 detects persons (detection targets) shown in the monitoring images received from the camera 11 based on the monitoring images.

At step S2, the monitoring control device 20 simply counts the number of presents present in the passenger area inside of the bus among the persons detected in the monitoring images and calculates this as a first count. Further, the monitoring control device 20 tracks persons detected in the monitoring images over time to thereby respectively count the number of persons entering the passenger area inside of the bus (entry count) and the number of persons leaving the passenger area (exit count) and subtracts the exit count from the entry count to calculate the second count.

At step S3, the monitoring control device 20 judges whether the first count and the second count are the same values. The monitoring control device 20 proceeds to the processing of step S4 if the first count and the second count are the same values. On the other hand, the monitoring control device 20 proceeds to the processing of step S5 if the first count and the second count are different values.

At step S4, since the first count and second count are the same value, the monitoring control device 20 makes the value the number of persons present in the passenger area inside of the bus.

At step S5, since the first count and second count are different values, the monitoring control device 20 adopts the larger count as correct and makes the larger value the number of persons present in the passenger area inside of the bus.

At step S6, the monitoring control device 20 corrects the smaller count among the first count and the second count to the larger count. In the present embodiment, if the first count is larger, the monitoring control device 20, as explained above, corrects the entry count to increase it so that the second count becomes the first count. Further, if the second count is larger, it corrects the first count to the second count.

The monitoring control device 20 according to the embodiment explained above is configured to calculate the number of detection targets present inside a predetermined area based on an image captured by the imaging device 10. Specifically, the monitoring control device 20 is configured to count the number of detection targets present in an area among the detection targets detected in the image to thereby calculate a first count (first estimated number) of detection targets in the area, track the detection targets detected in the images to thereby count the number of detection targets entering the area and the number of detection targets leaving the area as respectively the entry count and exit count, calculate a second count (second estimated number) of detection targets in the area based on the difference between the entry count and exit count, and, when the first count and the second count differ, adopt the larger one as the number of detection targets in the area.

The first count basically tends to be counted smaller than the number of persons actually present in a predetermined area. For this reason, when the first count is smaller than the second count, the second count is adopted as the number of objects present in the predetermined area and thereby it is possible to more precisely calculate the number of objects present in the predetermined area in a state with the object concealed by another object. Further, the second count is counted smaller than the number of persons actually present in a predetermined area when an object crosses a detection line and enters the area in a state concealed by another object. For this reason, when the second count is smaller than the first count, the first count is adopted as the number of persons present in the predetermined area whereby it is possible to more precisely calculate the number of objects at least when an object crosses a detection line and enters the area in a state concealed by another object.

Further, when the first count (first estimated number) is larger, the monitoring control device 20 according to the present embodiment is configured to correct the entry count to increase it so that the second count (second estimated number) becomes the first count.

If the first count is larger, basically it can be guessed that the first count has become larger since an object targeted for detection has crossed the detection line and entered the area in a state concealed by another object. For this reason, when the first count is larger, it is possible to correct the entry count to increase it so that the second count becomes the first count and thereby suppress a drop in calculation precision of the second count.

Further, the monitoring control device 20 according to the present embodiment is configured to correct the first count (first estimated number) to the second count (second estimated value) when the second count is larger.

Due to this, it is possible to suppress a drop in calculation precision of the first count.

Above, an embodiment of the present invention was explained, but the embodiment just shows one of the applications of the present invention. It is not intended to limit the technical scope of the present invention to the specific configuration of the above embodiment.

For example, in the above embodiment, based on the detected number of detection targets present inside a predetermined area, the monitoring control device 20 may further judge if the passenger capacity in the area is exceeded or judge the degree of crowding and notify persons desiring to enter the area of the results of judgment in some way.

Further, for example, in the above embodiment, the computer program run in the monitoring control device 20 may be provided in a form recorded in a computer readable portable recording medium such as a semiconductor memory, magnetic recording medium, or optical recording medium and provided as a computer program product.

## Claims

1. A monitoring control device (20) configured to calculate a number of detection targets present inside a predetermined area based on an image captured by an imaging device (10), wherein
the monitoring control device (20) is configured to:
count the number of the detection targets present in the area among the detection targets detected in an image to calculate a first estimated number of the detection targets inside the area,
track the detection targets detected in the image to thereby count the number of detection targets entering the area and the number of detection targets exiting the area respectively as an entry count and exit count and calculate a second estimated number of the detection targets inside the area based on a difference between the entry count and the exit count; and,
when the first estimated number and the second estimated number differ, employ the larger one as the number of the detection targets inside the area.

2. The monitoring control device (20) according to claim 1, configured to correct the entry count so that the second estimated number becomes the first estimated number when the first estimated number is larger. .

3. The monitoring control device (20) according to claim 1 or claim 2, configured to correct the first estimated number to the second estimated number when the second estimated number is larger. .

4. A method of monitoring by a monitoring control device (20) configured to detect a number of detection targets present inside a predetermined area based on an image captured by an imaging device (10), wherein
the monitoring method comprises:
counting the number of the detection targets present in the area among the detection targets detected in an image to calculate a first estimated number of the detection targets inside the area;
tracking the detection targets detected in the image to thereby count the number of detection targets entering the area and the number of detection targets exiting the area respectively as an entry count and exit count and calculate a second estimated number of the detection targets inside the area based on a difference between the entry count and the exit count; and,
when the first estimated number and the second estimated number differ, employing the larger one as the number of the detection targets inside the area.

5. A computer program for calculating a number of detection targets present inside a predetermined area based on an image captured by an imaging device (10), wherein
the computer program comprises instructions which, when the program is executed by a computer, cause the computer to :
count the number of the detection targets present in the area among the detection targets detected in an image to calculate a first estimated number of the detection targets inside the area;
track the detection targets detected in the image to thereby count the number of detection targets entering the area and the number of detection targets exiting the area respectively as an entry count and exit count and calculate a second estimated number of the detection targets inside the area based on a difference between the entry count and the exit count; and,
when the first estimated number and the second estimated number differ, employ the larger one as the number of the detection targets inside the area.
